# FASCICULE DE BREVET EUROPEEN

(11) **EP 3 277 867 B1**
(45) Date de publication et mention de la délivrance du brevet: **08.05.2019**
(21) Numéro de dépôt: 16714840.2
(22) Date de dépôt: 30.03.2016
(51) Int. Cl.: B60C 9/22, B29L 30/00, B60C 9/02, B29K 105/08, B60C 9/20, B29D 30/38, B60C 9/00, B60C 9/14, B29C 43/28, B29C 43/24, B29K 667/00, B29K 105/20, B29D 30/30, B29K 21/00

(54) **PROCEDE DE FABRICATION D'UNE STRUCTURE DE RENFORT POUR PNEUMATIQUE**
METHODE ZUR HERSTELLUNG EINER VERSTÄRKUNGSSTRUKTUR VON FAHRZEUGREIFEN
METHOD FOR MANUFACTURING A REINFORCING STRUCTURE FOR VEHICLE TYRES

(30) Priorité: 30.03.2015 FR 1552667
(43) Date de publication de la demande: 07.02.2018
(73) Titulaire: Compagnie Générale des Etablissements Michelin, 63000 Clermont-Ferrand (FR)
(72) Inventeur: FABRE, Thomas, 63040 Clermont-Ferrand Cedex 9 (FR); PIALOT, Frédéric, 63040 Clermont-Ferrand Cedex 9 (FR); BOISDON, Bertrand, 63040 Clermont-Ferrand Cedex 9 (FR)
(74) Mandataire: Noel, Luminita
(86) Numéro de dépôt international: PCT/EP2016/056964
(87) Numéro de publication internationale: WO 2016/156434

(56) Documents cités:
- EP-A1- 2 781 369
- US-A- 4 011 899

## Description

L'invention se situe dans le domaine de la fabrication de pneumatiques et elle concerne plus particulièrement la fabrication d'une structure de nappe de renfort carcasse améliorée pour pneumatiques à armature de carcasse radiale, c'est-à-dire une armature dont les renforts sont contenus dans des plans radiaux contenant l'axe de rotation ou ils forment des petits angles avec ces plans radiaux.

De manière généralement connue, la structure d'un pneumatique radial comprend plusieurs zones ayant chacune un rôle bien défini dans le fonctionnement d'un pneumatique. Un pneumatique comprend ainsi deux régions des bourrelets destinées à coopérer avec les sièges d'une jante de montage, ces bourrelets comprenant une structure de renforcement dans la direction circonférentielle à laquelle est ancrée l'armature de carcasse. Une armature de renforcement de sommet est disposée radialement à l'extérieur de l'armature de carcasse et réalise le frettage de celle-ci lors de la mise sous pression du pneumatique. Une bande de roulement est disposée radialement à l'extérieur de l'armature de sommet et assure le contact du pneumatique avec le sol pendant le roulage. Entre chaque bourrelet et chaque extrémité axiale du sommet s'étend un flanc de pneumatique qui réalise la liaison mécanique entre le bourrelet et le sommet du pneumatique. A l'intérieur du pneumatique, entre les deux bourrelets, se trouve une couche étanche au gaz de gonflage connue sous le terme de « gomme intérieure » car elle couvre l'intégralité de la paroi interne du pneumatique.

Pour réaliser une telle structure, on fabrique généralement un pneumatique par empilements successifs de plusieurs nappes de gomme sur un tambour de confection rotatif, ces nappes de gomme ayant chacune des propriétés spécifiques, étant éventuellement munies d'éléments de renfort, certaines nappes étant par ailleurs reliées à des tringles autour desquelles sont réalisés les bourrelets.

La première nappe que l'on dispose sur le tambour de confection est la gomme intérieure car elle forme la paroi interne étanche au gaz de gonflage du pneumatique. Une telle gomme intérieure est décrite dans le document WO 2008/145277 au nom des demanderesses et est formée à partir de compositions à base de caoutchouc butyle connues pour leurs propriétés d'étanchéité ou à base d'élastomère thermoplastique copolymère à blocs polystyrènes et polyisobutylène. Fonctionnant à satisfaction, la pression de gonflage d'un pneu muni d'une telle gomme d'étanchéité doit toutefois être vérifiée régulièrement, car des fuites de gaz peuvent toutefois apparaître dans le temps.

Dans le but de renforcer l'étanchéité du pneumatique, le document EP 2205452 au nom des demanderesses décrit un pneumatique comportant une enveloppe étanche de gomme et une structure de renfort formée de fibres noyées dans la gomme, la structure de renfort étant formée d'une couche carcasse et d'une couche sommet et des moyens de liaison entre ces couches. Dans ce document, les fibres utilisées pour réaliser la structure de renfort ont chacune une section transversale totalement connexe, elles sont de forme aplatie et présentent des dimensions mutuellement orthogonales de dimensions préétablies et s'étendent selon une direction sensiblement radiale su pneu. La structure de renfort décrite dans ce document permet de renforcer l'étanchéité du pneu et de réduire la fatigue mécanique de celui-ci.

On connaît par ailleurs du document EP 1397262 un pneumatique comprenant une armature supplémentaire de renforcement des flancs formée de bandes de gomme renforcée par des câbles inclinés par rapport à la direction circonférentielle du pneumatique. Les bandes de gomme de renforcement sont déposées par enroulement et chevauchement partiel d'une bande sur l'autre entre la gomme intérieure et la nappe carcasse lors de la confection de l'ébauche de pneumatique. Le rôle de cette armature supplémentaire de renforcement est de permettre une meilleure tenue mécanique des flancs lorsque le pneumatique subit des fortes contraintes pendant le roulage.

Tout en assurant des performances en termes de longévité, d'étanchéité et de résistance, les pneumatiques décrits dans ces documents présentent une structure complexe et leurs méthodes de fabrication comportent de nombreuses étapes qui s'avèrent délicates à mettre en oeuvre et sont consommatrices de temps.

On connaît par ailleurs des documents EP 2781369 et US 4011899 des structures de renfort composite réalisées à base de bandelettes noyées dans un matériau élastomère selon le préambule de la revendication 1. De telles structures composites présentent, certes, une meilleure résistance mécanique, mais ont pour conséquence d'augmenter le poids du pneumatique.

L'invention a pour objectif de pallier au moins l'un des inconvénients des documents ici décrits et de proposer un procédé de fabrication d'une structure de renfort améliorée permettant de réduire significativement la masse du pneumatique sans réduire ses performances par ailleurs.

A cet effet, l'invention propose un procédé de fabrication d'une structure de renfort pour pneumatique sous forme d'un ensemble stratifié formé de deux couches de bandelettes de renfort de section transversale totalement connexe, de forme aplatie, caractérisé en ce que
- on dispose les bandelettes de chaque couche côte à côte selon une direction principale de pose en espaçant les bandelettes de la première couche entre elles d'une distance inférieure à la largeur des bandelettes de la deuxième couche et de manière à ce que les bords des bandelettes de la première couche se chevauchent avec les bords des bandelettes de la deuxième couche et en ce que
- on sépare les deux couches de bandelettes par une couche de gomme de découplage.

Selon l'invention, on réalise un ensemble stratifié de renfort à l'aide d'un procédé avantageux d'agencement en au moins deux couches des bandelettes de renfort séparées entre elles par une couche de gomme de découplage, les bandelettes de renfort de l'invention ayant à la fois de bonnes propriétés mécaniques et une bonne imperméabilité au gaz de gonflage. Grâce à ce procédé, on obtient une structure de renfort pour pneumatique qui est agencée radialement le plus à l'intérieur du pneumatique car elle permet de rester étanche au gaz de gonflage après conformation de l'ébauche de pneumatique, tout en assurant la tenue mécanique d'une nappe de renfort carcasse de type connu.

Une telle structure de renfort a l'avantage de d'assurer une étanchéité au gaz de gonflage au moins équivalente aux solutions existantes tout en permettant de réduire de manière substantielle l'épaisseur et le poids du pneumatique par rapport à un pneumatique classique.

En effet, la structure de renfort selon l'invention présente des bandelettes mono filament aplaties, chacune étant imperméable au gaz de gonflage, les différentes bandelettes étant disposées en quinconce lorsqu'elles sont « à plat » ou lors de la phase de confection sur un tambour de l'ébauche de pneumatique et de manière à ce que leurs bords continuent à se chevaucher lors de la conformation du pneumatique. Selon un aspect important de l'invention, les couches de bandelettes sont séparées par une couche de gomme de découplage sur laquelle adhèrent les bandelettes de chaque couche. Le coefficient d'allongement de la gomme de découplage est supérieur à celui des bandelettes ce qui fait que, lors de la conformation de l'ébauche de pneumatique, l'écartement des bandelettes l'une par rapport à l'autre est piloté par l'allongement de la gomme de découplage qu'elles suivent. Ainsi, il a été constaté, lors des tests effectués en laboratoire, que, en l'absence de couche de gomme de découplage entre les deux couches de bandelettes, lors de la mise en conformation, les bandelettes glissent l'une sur l'autre, ce qui mène à une conformation avec des écarts de pas entre les deux couches de bandelettes et, par conséquent, un risque de manque d'étanchéité dans la structure obtenue. Or, lors des tests effectués avec une couche de gomme de découplage d'épaisseur prédéterminée, il s'est avéré que l'écartement entre les bandelettes reste constant car les bandelettes suivent la déformation de la gomme de découplage et se déplacent en même temps que celle-ci. De surcroît, la pose de la bandelette sur une couche de gomme rend plus aisée la fabrication de la structure de renfort.

Une telle structure de renfort présente de bonnes propriétés d'étanchéité et une bonne résistance mécanique et, de ce fait, elle remplace à elle seule plusieurs nappes qui entrent dans la confection d'un pneu classique. Ainsi, une telle structure de renfort remplace la gomme intérieure et la nappe carcasse, voire aussi la nappe de renfort des flancs lorsqu'elle est nécessaire.

De préférence, les bandelettes de la première et de la deuxième couche ont une même largeur L et leurs bords se chevauchent sur au moins 20% de la largeur L. Ceci permet d'assurer une bonne étanchéité après conformation, même dans les zones du pneumatique où la conformation est plus importante, telle la zone des épaules.

Avantageusement, le module d'élasticité des bandelettes est supérieur à 500 MPa. Ceci permet à la structure de renfort d'assurer la tenue mécanique du pneumatique.

De préférence, ledit ensemble stratifié est disposé entre et au contact de deux couches de gomme. Ceci permet une meilleure adhésion de l'ensemble stratifié avec les autres couches de gomme qui entrent dans la structure d'un pneumatique.

De préférence, ladite structure de renfort comprend, dans l'ordre : une couche d'élastomère d'épaisseur comprise entre 0,1 et 0,5mm, une première couche de bandelettes de renfort ayant une épaisseur comprise entre 0,05 et 0,35 mm, une couche de gomme de découplage d'épaisseur comprise entre 0,1 et 0,5mm, une deuxième couche de bandelettes ayant une épaisseur comprise entre 0,05 et 0,35 mm et une couche d'élastomère d'épaisseur comprise entre 0,1 et 0,5mm.

Avantageusement, chaque bandelette a une largeur L et les bandelettes formant une couche sont disposées avec un pas p inférieur à 2L. Les bandelettes sont disposées côte à côte avec un pas p supérieur à la largeur L d'une bandelette mais inférieur à deux fois la largeur L de la bandelette.

De préférence, la valeur du chevauchement des bords des bandelettes des deux couches est comprise entre 0,2 et 0,5 fois le pas p.

Avantageusement, la largeur des bandelettes est comprise entre 1 et 12mm, de préférence entre 3 et 7mm.

De préférence, lesdites bandelettes sont en un seul matériau.

De préférence encore, ledit matériau est choisi parmi : le PET, le PEN, l'aluminium, l'acier ou les polyamides.

Dans un premier mode de l'invention, on réalise ladite structure de renfort par calandrage.

Dans un deuxième mode de l'invention, on réalise ladite structure de renfort par enroulement de couches successives sur une virole rotative.

L'objet de l'invention est également atteint avec une structure de renfort pour pneumatique obtenue avec le procédé de l'invention.

L'objet de l'invention est également atteint avec un pneumatique exempt de gomme interne d'étanchéité comportant une structure de renfort obtenue avec le procédé de l'invention.

D'autres caractéristiques et avantages de l'invention apparaîtront dans la description qui va suivre. Cette description, donnée à titre d'exemple et non limitative, se réfère aux dessins joints en annexe et sur lesquels :
- la figure 1 est une vue en coupe radiale d'un pneumatique de type connu,
- la figure 2 est une représentation schématique en coupe transversale d'une armature de carcasse de type connu,
- la figure 3 est une représentation schématique en perspective d'une structure de renfort selon l'invention,
- la figure 4 est une représentation schématique en coupe transversale d'une structure de renfort selon l'invention avant conformation de l'ébauche de pneumatique,
- la figure 5 est une représentation schématique en coupe transversale d'une structure de renfort selon l'invention après conformation de l'ébauche de pneumatique,
- la figure 6 est une représentation schématique d'un dispositif de fabrication d'une structure de renfort selon un premier mode de réalisation de l'invention,
- la figure 7 est une représentation schématique d'un dispositif de fabrication d'une structure de renfort selon un deuxième mode de réalisation de l'invention.

Sur les différentes figures, les éléments identiques ou similaires portent la même référence. Leur description n'est donc pas systématiquement reprise.

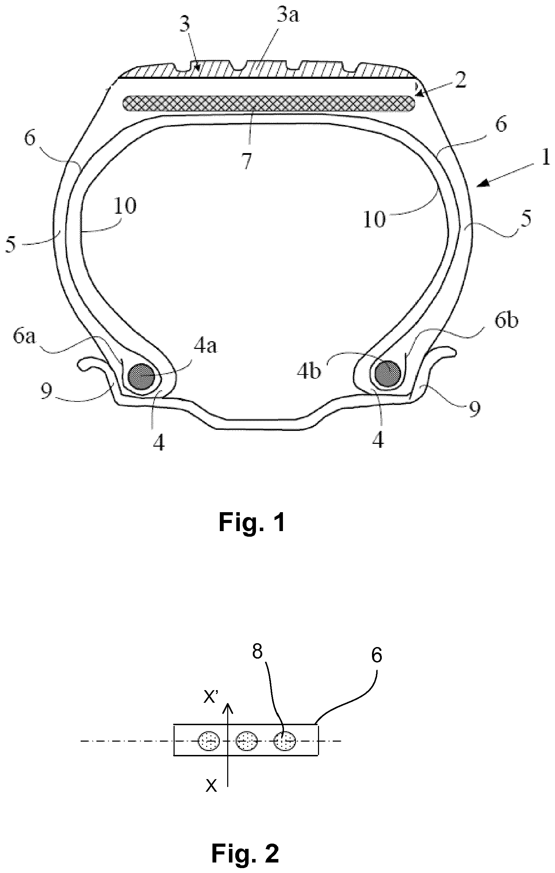

Sur la figure 1, un pneumatique 1 schématisé comporte un sommet 2 comprenant une bande de roulement 3 dont la partie radialement externe 3a est destinée à entrer au contact de la route, deux bourrelets inextensibles 4 dans lesquels est ancrée une armature de carcasse 6. Le sommet 2, relié aux bourrelets 4 par deux flancs 5, est de manière connue en soi renforcé par une armature de sommet ou "ceinture" 7 au moins en partie métallique et qui est radialement externe par rapport à l'armature de carcasse 6. Une ceinture de pneumatique est généralement constituée d'au moins deux nappes de ceinture superposées, dites parfois nappes "de travail" ou nappes "croisées", dont les éléments de renforcement ou "renforts" sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneumatique considéré. Chacune de ces deux nappes croisées est constituée d'une matrice de caoutchouc ou "gomme de calandrage" enrobant les renforts. Dans la ceinture, les nappes croisées peuvent être complétées par diverses autres nappes ou couches de caoutchouc auxiliaires, de largeurs variables selon les cas, comportant ou non des renforts ; on citera à titre d'exemple de simples coussins de gomme, des nappes dites "de protection" chargées de protéger le reste de la ceinture des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Pour le renforcement des ceintures ci-dessus, en particulier de leurs nappes croisées, nappes de protection ou nappes de frettage, on utilise généralement des renforts sous forme de câbles d'acier ("steel cords") ou des câblés textiles ("textile cords") constitués de fils fins assemblés entre eux par câblage ou retordage.

L'armature de carcasse 6 est ici ancrée dans chaque bourrelet 4 par enroulement autour de deux tringles 4a, 4b, le retournement 6a, 6b de cette armature 6 étant par exemple disposé vers l'extérieur du pneumatique 1 qui est ici représenté monté sur sa jante 9. L'armature de carcasse 6 est constituée d'une nappe renforcée par des câbles textiles radiaux, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 7). Bien entendu, ce pneumatique 1 comporte en outre de manière connue une couche 10 de gomme ou élastomère intérieure (communément appelée " gomme intérieure " ou " inner liner ") qui définit la face radialement interne du pneumatique et qui est destinée à protéger la nappe de carcasse de la diffusion d'air provenant de l'espace intérieur au pneumatique.

Les flancs 5 sont parfois renforcés par des nappes de renfort supplémentaires afin de répondre à des sollicitations mécaniques importantes. Ces nappes de renfort supplémentaires comportent généralement des éléments de renforcement ou "renforts" disposés parallèlement les uns aux autres dans une matrice de gomme et sont agencés radialement à l'intérieur ou à l'extérieur par rapport à l'armature de carcasse.

Dans une armature de carcasse de type connu, un renfort prend la forme d'un fil ou d'un câble comprenant un ensemble de fils torsadés ou tressés. Le ou les fils constituant le renfort peuvent être de nature métallique, polymérique, naturelle, ou de nature composite.

La figure 2 illustre les renforts 8 visibles dans une coupe transversale de l'armature de carcasse 6.Les renforts 8 d'une armature de carcasse 6 sont espacés les uns des autres et sont noyés dans une matrice de gomme. Par X-X' on a représenté le parcours effectué par le gaz de gonflage pour traverser l'armature de carcasse 6.

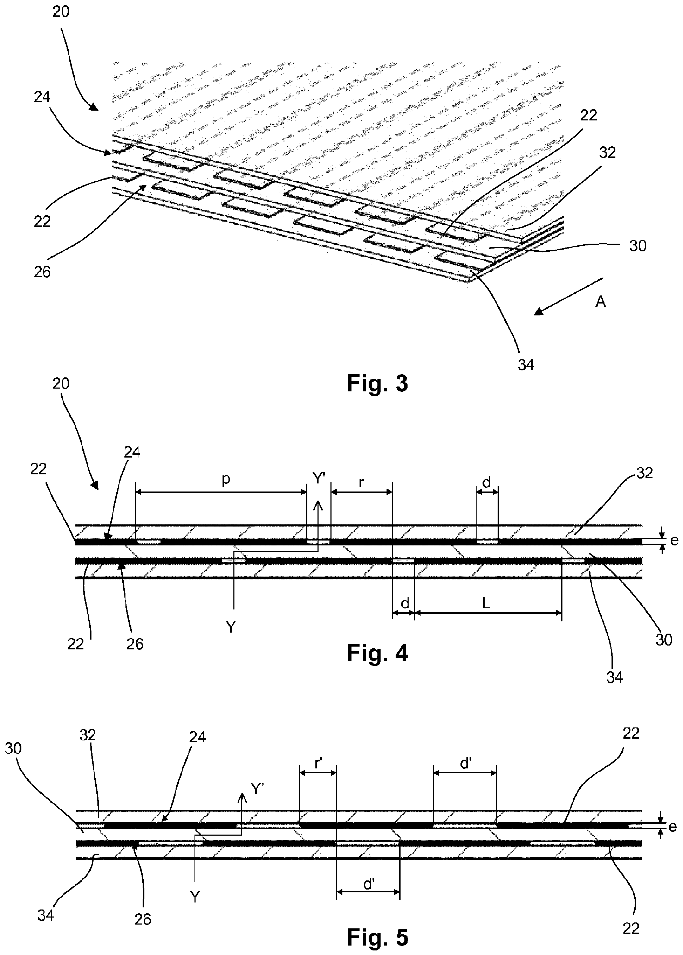

Comme l'illustrent les figures 3 à 7, l'invention est relative à la fabrication d'une structure de renfort 20 qui utilise un arrangement avantageux de bandelettes 22 déposées en couches superposées pour former un ensemble stratifié. Les bandelettes 22 de l'invention sont de section transversale totalement connexe et de forme aplatie. Par bandelette de forme aplatie, on entend une bande étroite, dont la largeur est supérieure à la hauteur ou l'épaisseur. On rappelle qu'une surface totalement connexe est une surface dont deux parties quelconques sont nécessairement liées entre elles.

Par ensemble stratifié on comprend tout produit comportant au moins deux couches, de forme plane ou non plane, qui sont au contact l'une de l'autre, ces dernières pouvant être ou non liées, où par « lié » on comprend incluant tout moyen d'assemblage, en particulier le collage.

Par gomme ou élastomère, on entend de préférence tout type d'élastomère, diénique ou non diénique par exemple thermoplastique, ou un mélange d'élastomères : caoutchouc naturel et caoutchouc synthétique, de charges renforçantes : noir de carbone et silice, de plastifiants : huiles, résines, et d'autres éléments chimiques comme le soufre par exemple.

Par couche on comprend une bande d'épaisseur très faible par rapport à ses autres dimensions, dont le rapport de l'épaisseur sur la plus grande de ses dimensions est inférieur à 0,5, de préférence inférieur à 0,1.

Plus particulièrement selon l'invention, la structure de renfort est réalisée sous forme d'un ensemble stratifié formé de deux couches de bandelettes espacées entre elles, se chevauchant et comportant une gomme de découplage disposée entre et au contact de deux couches de bandelettes.

Les bandelettes sont réalisées à partir d'un film étiré mono ou multi axialement ayant un module en extension E supérieur à 500 MPa. Ce film est réalisé de préférence en un polymère thermoplastique qui est préférentiellement un polyester, plus préférentiellement un PET (polyéthylène téréphtalate), ou un PEN (polyéthylène naphtalate). Le film peut également être réalisé en un polyamide. Les bandelettes des deux couches peuvent être réalisées en un même matériau ou dans des matériaux différents.

De préférence, on applique également un traitement thermique à la bandelette, de manière à limiter sa contraction thermique lors de la montée en température de l'ensemble. Un tel traitement thermique est par exemple un recuit, une trempe ou une combinaison de plusieurs de ces traitements.

Dans une variante, le film peut être métallique, par exemple en aluminium ou en acier.

Dans une autre variante, matériau composite comportant une matrice de PET, PEN, PA ou de résine époxy et renforcé de fibres de verre, de carbone ou de fibres synthétiques, telles les fibre de nylon, d'aramide, etc.

Le matériau de la bandelette est choisi de manière à présenter une bonne imperméabilité au gaz de gonflage. A titre d'exemple, les bandelettes doivent avoir une perméabilité à l'azote comprise entre 0,001 et 10 cm³mm/m²/jour/atm et de préférence comprise entre 0,1 et 1 cm³mm/m²/jour/atm.

La figure 3 illustre par une vue en perspective une structure de renfort 20 selon l'invention qui comprend : une première couche 24 de bandelettes 22 disposées côte à côté en étant espacées entre elles, une deuxième couche 26 de bandelettes 22 disposées côte à côte, espacées entre elles en étant parallèles aux bandelettes de la première couche ainsi qu'à la direction de pose A. Les bandelettes de la première couche 24 sont décalées par rapport aux bandelettes de la deuxième couche dans une direction perpendiculaire à la direction de pose A. Les deux couches de bandelettes sont séparées par une couche de gomme de découplage 30. La structure de renfort est complétée par deux couches de gomme, une couche externe 32 et une couche interne 34.

La figure 4 illustre par une vue schématique en coupe réalisée avec un plan transversal à la direction de pose A, une structure de renfort avant la conformation de l'ébauche ou lors d'une pose à plat, et la figure 5 illustre une même vue réalisée après conformation de l'ébauche de pneumatique. On rappelle que par conformation on comprend une opération lors de laquelle on réalise le passage d'une ébauche de forme générale cylindrique à une forme générale toroïdale.

Dans l'exemple illustré aux figures, on utilise des bandelettes identiques ayant une largeur « L » et une épaisseur « e » et on réalise une première couche 24 de bandelettes par agencement de plusieurs bandelettes parallèles entre elles, espacées d'une distance « d », avec un pas « p ». On réalise la deuxième couche 26 de bandelettes de la même manière, mais en décalant les bandelettes 22 de manière à ce que leurs bords se chevauchent avec les bandelettes de la première couche 24 d'une distance de recouvrement « r ». On note sur la figure 5 que l'espacement entre les bandelettes après conformation est devenu « d' », avec d'>d et le recouvrement « r' » avec r'<r.

Après des tests réalisés en laboratoire, il s'est avéré qu'il est avantageux d'utiliser des bandelettes 22 ayant une largeur L comprise entre 1 et 12mm et de préférence comprise entre 3 et 7mm et de les déposer avec un pas p inférieur au double de la largeur L pour réaliser une première couche 24 de bandelettes. La deuxième couche 26 de bandelettes est de préférence réalisée avec des bandelettes identiques, posées avec un même pas mais en les décalant d'une distance comprise entre 0,2 et 0,5 de la valeur du pas p par rapport aux bandelettes de la première couche 24. On arrive ainsi à obtenir un ensemble stratifié dans lequel les bords des bandelettes des deux couches se chevauchent avant conformation (fig. 4). La valeur du chevauchement est choisie de manière à ce que les bandelettes des deux couches se chevauchent aussi après conformation dont la fig. 5 illustre une coupe dans la zone des épaules de l'ébauche. La structure de renfort de la zone des bourrelets est peu modifiée lors de la conformation et le décalage des bandelettes des deux couches est pratiquement celui de la fig. 4 même après conformation. Par Y-Y' on a représenté aux figures 4 et 5 le parcours devant être effectué par le gaz de gonflage pour parvenir à traverser la structure de renfort 20. On observe ainsi que le parcours Y-Y' est plus grand que le parcours X-X' de la figure 2 où le gaz de gonflage traverse l'armature de carcasse selon une direction perpendiculaire à celle-ci. Dans la structure de renfort 20 de l'invention, le parcours du gaz est dévié par la bandelette 22 (la direction d'étirage de la bandelette est avantageusement choisie perpendiculaire au déplacement du gaz de gonflage) ce qui impose un parcours supplémentaire au gaz de gonflage et permet de réduire les pertes de gaz de gonflage via la structure de renfort 20.

Un paramètre important est également l'épaisseur des bandelettes, cette épaisseur doit être fine et bien maîtrisée, elle est comprise entre 0,05 et 0,35mm et de préférence entre 0,05 et 0,15mm.

Un autre paramètre important dans la réalisation de l'ensemble stratifié de l'invention est l'épaisseur de la couche de gomme de découplage 30 et son adhésion avec les bandelettes de renfort 22. Ainsi, la couche de gomme de découplage doit avoir une épaisseur bien maîtrisée afin de garantir l'uniformité de sa déformation sur toute la surface de l'ensemble stratifié. L'épaisseur de la couche de gomme de découplage a une valeur comprise entre 0,1 et 0,5mm avec une tolérance de +/-5% de la valeur de l'épaisseur de cette couche.

En ce qui concerne l'adhésion entre la gomme de découplage 30 et les bandelettes 22, elle doit être parfaite afin de pouvoir assurer le déplacement contrôlé du renfort lors de la conformation de l'ébauche. Plusieurs solutions sont proposées afin de garantir cette adhésion. Une des solutions consiste à réaliser l'ensemble stratifié à chaud. Une autre solution pour faire adhérer la gomme de découplage à la bandelette est l'utilisation d'adhésif approprié. Par exemple, une colle textile du type « RFL » (résorcinol-formaldéhyde-latex) est indiquée pour réaliser l'adhésion entre une bandelette réalisée en un polymère thermoplastique et la couche de gomme. Toute autre colle appropriée connue pour conférer une adhésion satisfaisante entre la gomme (caoutchouc) et les bandelettes peut ainsi être utilisée.

Les bandelettes de l'ensemble stratifié sont déposées en suivant une direction de pose pour constituer chacune une couche de bandelettes, les deux couches s'étendant dans deux plans parallèles séparées entre elles par une couche de gomme de découplage. La direction de pose des bandelettes est longitudinale ou circonférentielle en fonction de la méthode de fabrication de l'ensemble stratifié, tel qu'il sera expliqué plus loin. Lors de la confection de l'ébauche, l'ensemble stratifié est déposé sur le tambour de manière à ce que la direction principale ou direction de pose des bandelettes soit sensiblement axiale (on entend parallèle à l'axe de symétrie de l'ébauche de pneumatique ou à l'axe de rotation du tambour).

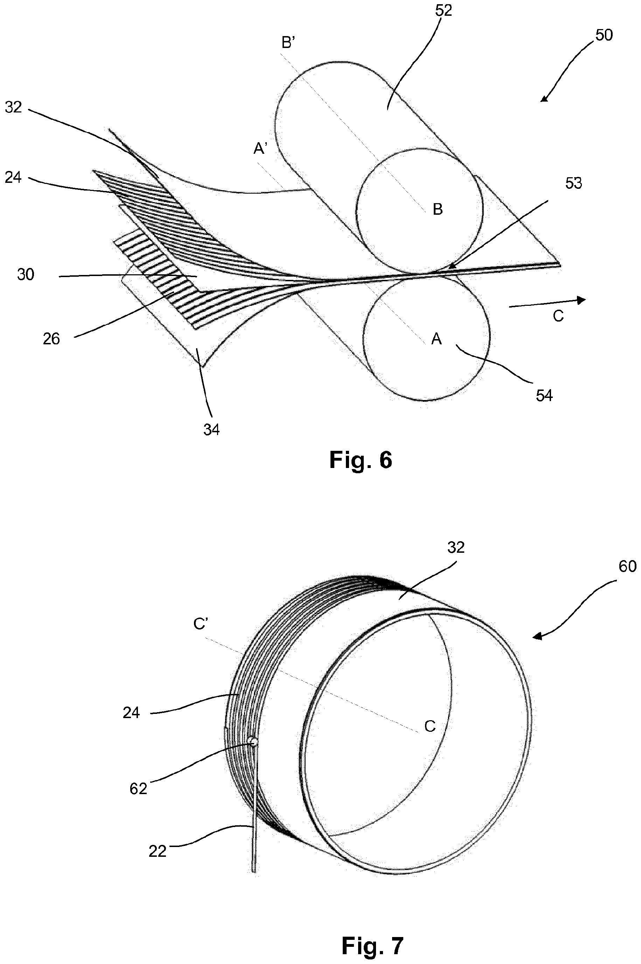

Pour la mise en oeuvre du procédé, l'invention propose, selon un premier mode de réalisation, un dispositif de calandrage 50 tel qu'illustré en figure 6 et comprenant deux cylindres de calandrage 52, 54 dont les axes respectivement AA' et BB' sont sensiblement parallèles entre eux. L'espace entre les deux cylindres définit un entrefer 53 dans lequel circulent : la couche externe 32 de gomme, la première couche 24 de bandelettes 22, la couche de gomme de découplage 30, la deuxième couche 26 de bandelettes 22 et la couche interne 34 de gomme. Les couches de bandelettes et la gomme de découplage les séparant sont prises en sandwich entre les deux couches de gomme et la pression exercée par les cylindres 52, 54 force la gomme à pénétrer dans les espaces entre les bandelettes permettant d'améliorer l'adhésion de l'ensemble. Le dispositif de calandrage est alimenté en couches de gomme à partir de bobines de gomme (non représentées), et les bandelettes sont déroulées à partir de bobines de bandelettes, les bandelettes de chaque couche étant guidées lors du passage dans un cylindre rainuré à rainures en U situé en amont des cylindres de calandrage. De tels cylindres de guidage de bandelettes (non représentés) sont du type connu dans le calandrage de nappes de renfort. De manière avantageuse, on peut alimenter les couches externe 32 et interne 34 par deux cylindres supplémentaires d'axes parallèles à ceux des cylindres 52,54 qui collaborent avec ces derniers afin de permettre la réalisation de manière simultanée lors de la fabrication des couches externe 32 et interne 34 dans les entrefers qu'ils forment avec les cylindres 52, 54. Ce procédé assure ainsi un calandrage à chaud de l'ensemble formant structure de renfort pour une meilleure adhésion des différentes couches.

L'ensemble stratifié ainsi obtenu défile à grande vitesse dans la direction de convoyage C qui est parallèle à la direction principale de pose des bandelettes. Pour obtenir une structure de renfort 20 utilisée dans la confection d'une ébauche de pneumatique, on découpe une longueur de l'ensemble de nappe issue du calandrage à une dimension correspondant environ à la dimension de l'entre-tringles de l'ébauche à confectionner. Le secteur ainsi découpé est ensuite posé sur un tambour de confection et constitue la première couche de l'ensemble formant ainsi une structure de renfort carcasse étanche.

La figure 7 illustre un dispositif permettant de réaliser une mise en oeuvre du procédé selon un deuxième mode de réalisation de l'invention. Ce dispositif comprend une virole sur laquelle sont posées par enroulements successifs les différentes couches qui entrent dans la composition de la structure de renfort 20. Sur la figure 7, on distingue un une virole 60 de forme cylindrique de section circulaire d'axe longitudinal CC'. La virole 60 comporte des moyens d'entrainement en rotation autour de son axe longitudinal CC'. Sur la virole a été déposée une couche de gomme formant la couche externe 32 sur laquelle on dépose par enroulement en hélice des bandelettes 22 d'épaisseur e et avec un pas p entre elles, bandelettes que l'on vient presser lors de la pose avec une roulette 62 afin d'assurer l'adhésion de la bandelette sur la couche de gomme déjà posée. La direction principale de pose des bandelettes 22 est dans ce cas la direction circonférentielle de la virole 60.

Après avoir fini l'enroulement des bandelettes sur la virole et avoir formé ainsi la première couche 24 de bandelettes, on recouvre cette couche par une couche de gomme de découplage 30. On applique ensuite les bandelettes 20 sur la couche de gomme de découplage en les décalant d'une distance d par rapport à celles de la première couche 24 pour obtenir, toujours par un enroulement en hélice, la deuxième couche 26 de bandelettes. Cette deuxième couche 26 est ensuite recouverte d'une couche de gomme 34. On obtient ainsi une structure de renfort sous forme d'un ensemble stratifié que l'on peut utiliser dans la confection d'un pneumatique. Afin de pouvoir l'utiliser en tant que structure de renfort carcasse pour un pneumatique radial, cet ensemble stratifié enroulé doit être découpé radialement sur une longueur correspondant environ à l'entre-tringles de l'ébauche à confectionner. On choisit de manière avantageuse une virole 60 de grand diamètre afin d'obtenir un ensemble stratifié ayant une forme presque plane. Le secteur ainsi découpé est ensuite posé sur un tambour de confection rotatif, de manière à ce que la direction de pose des bandelettes soit sensiblement parallèle à l'axe de rotation du tambour, et constitue la première couche de l'ébauche de pneumatique formant ainsi une structure de renfort carcasse étanche.

Dans une variante non illustrée aux figures, on enrobe de gomme une bandelette 22 de largeur et l'on pose sur un tambour de confection d'ébauche de pneumatique. Pour ceci, les dimensions (largeur et épaisseur) de l'enrobage de gomme autour d'une bandelette 22 de largeur L et d'épaisseur e sont calculées de manière à ce que l'on obtienne une structure de renfort selon l'invention sans poser de couche de gomme supplémentaire.

D'autres variantes et modes de réalisation de l'invention peuvent être envisagés sans sortir du cadre de ces revendications. Ainsi une structure ayant trois ou plusieurs couches de bandelettes séparées entre elles par une gomme de découplage peut également être envisagée.

## Revendications

1. Procédé de fabrication d'une structure de renfort (20) pour pneumatique sous forme d'un ensemble stratifié formé de deux couches de bandelettes (24, 26) de renfort de section transversale totalement connexe, de forme aplatie, **caractérisé en ce que**
- on dispose les bandelettes de chaque couche côte à côte selon une direction principale de pose en espaçant les bandelettes (22) de la première couche (24) entre elles d'une distance inférieure à la largeur des bandelettes (22) de la deuxième couche (26) et de manière à ce que les bords des bandelettes (22) de la première couche (24) se chevauchent avec les bords des bandelettes (22) de la deuxième couche (26) et **en ce que**
- on sépare les deux couches de bandelettes par une couche de gomme de découplage (30).

2. Procédé de fabrication d'une structure de renfort (1) selon la revendication 1, **caractérisé en ce que** les bandelettes (22) de la première et de la deuxième couche ont une même largeur L et leurs bords se chevauchent sur au moins 20% de la largeur L.

3. Procédé selon l'une des revendications précédentes, **caractérisé en ce que** le module d'élasticité des bandelettes (22) est supérieur à 500 MPa.

4. Procédé selon l'une des revendications précédentes, dans lequel ledit ensemble stratifié est disposé entre et au contact de deux couches de gomme (32,34).

5. Procédé selon l'une des revendications précédentes, **caractérisé en ce que** ladite structure de renfort comprend, dans l'ordre : une couche externe (32) d'élastomère d'épaisseur comprise entre 0,1 et 0,5mm, une première couche de bandelettes (24) de renfort ayant une épaisseur comprise entre 0,05 et 0,35 mm, une couche de gomme de découplage (30) d'épaisseur comprise entre 0,1 et 0,5mm, une deuxième couche de bandelettes (26) ayant une épaisseur comprise entre 0,05 et 0,35 mm et une couche interne (34) d'élastomère d'épaisseur comprise entre 0,1 et 0,5mm.

6. Procédé selon l'une des revendications précédentes, **caractérisé en ce que** chaque bandelette (22) a une largeur L et les bandelettes (22) formant une couche sont disposées avec un pas p inférieur à 2L.

7. Procédé selon la revendication précédente, **caractérisé en ce que** la valeur du chevauchement des bords des bandelettes (22) des deux couches de bandelettes (24,26) est comprise entre 0,2 et 0,5 fois le pas p.

8. Procédé selon l'une des revendications 6 ou 7, caractérisé en la largeur L des bandelettes (22) est comprise entre 1 et 12mm, de préférence entre 3 et 7mm.

9. Procédé selon l'une des revendications précédentes, **caractérisé en ce que** lesdites bandelettes (22) sont en un seul matériau.

10. Procédé selon la revendication précédente, **caractérisé en ce que** ledit matériau est choisi parmi : le PET, le PEN, l'aluminium, l'acier ou les polyamides.

11. Procédé selon l'une des revendications précédentes, **caractérisé en ce que** la structure de renfort (20) est réalisée par calandrage.

12. Procédé selon l'une des revendications 1 à 10, **caractérisé en ce que** la structure de renfort (20) est réalisée par enroulement de couches successives sur une virole (60) rotative.

13. Structure de renfort pour pneumatique obtenue avec un procédé selon l'une des revendications 1 à 12.

14. Pneumatique exempt de gomme interne d'étanchéité comportant une structure de renfort (20) obtenue avec un procédé selon l'une des revendications 1 à 12.

## Patentansprüche

1. Verfahren zur Herstellung einer Verstärkungsstruktur (20) für einen Reifen in Form einer geschichteten Anordnung, die von zwei Schichten (24, 26) von Verstärkungsstreifen mit vollständig zusammenhängendem Querschnitt von abgeflachter Form gebildet wird, **dadurch gekennzeichnet, dass**
- die Streifen jeder Schicht nebeneinander in einer Hauptverlegerichtung angeordnet werden, indem die Streifen (22) der ersten Schicht (24) mit einem Abstand zwischen ihnen angeordnet werden, der kleiner als die Breite der Streifen (22) der zweiten Schicht (26) ist, und derart, dass sich die Ränder der Streifen (22) der ersten Schicht (24) mit den Rändern der Streifen (22) der zweiten Schicht (26) überlappen, und dadurch, dass
- die zwei Schichten von Streifen durch eine Schicht aus Entkopplungsgummi (30) getrennt werden.

2. Verfahren zur Herstellung einer Verstärkungsstruktur (1) nach Anspruch 1, **dadurch gekennzeichnet, dass** die Streifen (22) der ersten und der zweiten Schicht ein und dieselbe Breite L aufweisen und ihre Ränder sich auf wenigstens 20 % der Breite L überlappen.

3. Verfahren nach einem der vorhergehenden Ansprüche, **dadurch gekennzeichnet, dass** das Elastizitätsmodul der Streifen (22) größer als 500 MPa ist.

4. Verfahren nach einem der vorhergehenden Ansprüche, wobei die geschichtete Anordnung zwischen und in Kontakt mit zwei Gummischichten (32, 34) angeordnet ist.

5. Verfahren nach einem der vorhergehenden Ansprüche, **dadurch gekennzeichnet, dass** die Verstärkungsstruktur der Reihe nach umfasst: eine äußere Schicht (32) aus Elastomer mit einer Dicke zwischen 0,1 und 0,5 mm, eine erste Schicht von Verstärkungsstreifen (24) mit einer Dicke zwischen 0,05 und 0,35 mm, eine Schicht aus Entkopplungsgummi (30) mit einer Dicke zwischen 0,1 und 0,5 mm, eine zweite Schicht von Streifen (26) mit einer Dicke zwischen 0,05 und 0,35 mm und eine innere Schicht (34) aus Elastomer mit einer Dicke zwischen 0,1 und 0,5 mm.

6. Verfahren nach einem der vorhergehenden Ansprüche, **dadurch gekennzeichnet, dass** jeder Streifen (22) eine Breite L aufweist und die eine Schicht bildenden Streifen (22) mit einer Schrittweite p angeordnet sind, die kleiner als 2L ist.

7. Verfahren nach dem vorhergehenden Anspruch, **dadurch gekennzeichnet, dass** die Größe der Überlappung der Ränder der Streifen (22) der zwei Schichten von Streifen (24, 26) zwischen dem 0,2- und dem 0,5-fachen der Schrittweite p liegt.

8. Verfahren nach einem der Ansprüche 6 oder 7, **dadurch gekennzeichnet, dass** die Breite L der Streifen (22) zwischen 1 und 12 mm, vorzugsweise zwischen 3 und 7 mm liegt.

9. Verfahren nach einem der vorhergehenden Ansprüche, **dadurch gekennzeichnet, dass** die Streifen (22) aus einem einzigen Material bestehen.

10. Verfahren nach dem vorhergehenden Anspruch, **dadurch gekennzeichnet, dass** das Material aus PET, PEN, Aluminium, Stahl oder Polyamiden ausgewählt ist.

11. Verfahren nach einem der vorhergehenden Ansprüche, **dadurch gekennzeichnet, dass** die Verstärkungsstruktur (20) durch Kalandrieren hergestellt wird.

12. Verfahren nach einem der Ansprüche 1 bis 10, **dadurch gekennzeichnet, dass** die Verstärkungsstruktur (20) durch Aufwickeln aufeinander folgender Schichten auf eine rotierende Hülse (60) hergestellt wird.

13. Verstärkungsstruktur für einen Reifen, die mit einem Verfahren nach einem der Ansprüche 1 bis 12 erhalten wurde.

14. Reifen ohne inneren Dichtgummi, der eine Verstärkungsstruktur (20) aufweist, die mit einem Verfahren nach einem der Ansprüche 1 bis 12 erhalten wurde.

## Claims

1. Method of manufacturing a reinforcing structure (20) for a tyre in the form of a stratified assembly formed of two layers of reinforcing strips (24, 26) of completely connected cross section, and flattened in shape, **characterized in that**
- the strips of each layer are laid side by side in a main direction of laying, spacing the strips (22) of the first layer (24) apart by a distance that is less than the width of the strips (22) of the second layer (26) and in such a way that the edges of the strips (22) of the first layer (24) overlap the edges of the strips (22) of the second layer (26), and **in that**
- the two layers of strips are separated by a layer (30) of uncoupling rubber.

2. Method of manufacturing a reinforcing structure (1) according to Claim 1, **characterized in that** the strips (22) of the first and the second layer have the same width L and their edges overlap over at least 20 % of the width L.

3. Method according to one of the preceding claims, **characterized in that** the elastic modulus of the strips (22) is greater than 500 MPa.

4. Method according to one of the preceding claims, wherein the said stratified assembly is arranged between and in contact with two layers of rubber (32, 34).

5. Method according to one of the preceding claims, **characterized in that** the said reinforcing structure comprises, in this order: an external layer (32) of elastomer of a thickness comprised between 0.1 and 0.5 mm, a first layer of reinforcing strips (24) having a thickness comprised between 0.05 and 0.35 mm, a layer of uncoupling rubber (30) of a thickness comprised between 0.1 and 0.5 mm, a second layer of strips (26) having a thickness comprised between 0.05 and 0.35 mm, and an internal layer (34) of elastomer of a thickness comprised between 0.1 and 0.5 mm.

6. Method according to one of the preceding claims, **characterized in that** each strip (22) has a width L and the strips (22) forming a layer are arranged with a pitch p of less than 2L.

7. Method according to the preceding claim, **characterized in that** the amount of overlap between the edges of the strips (22) of the two layers of strips (24, 26) is comprised between 0.2 and 0.5 times the pitch p.

8. Method according to one of Claims 6 and 7, **characterized in** the width L of the strips (22) is comprised between 1 and 12 mm, preferably between 3 and 7 mm.

9. Method according to one of the preceding claims, **characterized in that** the said strips (22) are made of a single material.

10. Method according to the preceding claim, **characterized in that** the said material is selected from PET, PEN, aluminium, steel, or polyamides.

11. Method according to one of the preceding claims, **characterized in that** the reinforcing structure (20) is produced by calendering.

12. Method according to one of Claims 1 to 10, **characterized in that** the reinforcing structure (20) is produced by winding successive layers onto a rotary shell ring (60).

13. Tyre reinforcing structure obtained using a method according to one of Claims 1 to 12.

14. Tyre with no airtight inner liner, comprising a reinforcing structure (20) obtained using a method according to one of Claims 1 to 12.
